# FASCICULE DE BREVET EUROPEEN

(11) **EP 0 410 933 B1**
(45) Date de publication et mention de la délivrance du brevet: **10.11.1993**
(21) Numéro de dépôt: 90810556.2
(22) Date de dépôt: 19.07.1990
(51) Int. Cl.: H02K 1/18, H02K 15/02

(54) **Moto-réducteur tubulaire à double isolation**
Rohrförmiger Motor mit Reduziergetriebe und Doppelisolation
Tubular motor with reduction gearing and with double insulation

(30) Priorité: 28.07.1989 FR 8910214
(43) Date de publication de la demande: 30.01.1991
(73) Titulaire: SOMFY, F-74300 Cluses (FR)
(72) Inventeur: Evreux, Gérard, F-74130 Ayze (FR)
(74) Mandataire: Meylan, Robert Maurice

(56) Documents cités:
- CH-A- 306 158
- DE-A- 2 124 229
- DE-C- 617 562
- FR-A- 1 069 946
- US-A- 3 693 035
- PATENT ABSTRACTS OF JAPAN vol. 2, no. 139 (E-78)(8723) 17 novembre 1978, & JP-A-53 107604 (SONY) 19 septembre 1978,

## Description

L'invention a pour objet un moto-réducteur tubulaire à double isolation comprenant un moteur constitué d'un stator solidaire d'un tube métallique entourant au moins le moteur et d'un rotor cinématiquement relié au mobile d'entrée d'un réducteur, dans lequel le stator est entouré d'une enveloppe isolante.

De tels moto-réducteurs tubulaires sont utilisés dans des dispositifs d'entraînement tubulaires dont le mobile d'entraînement est constitué d'un tube entraîné en rotation par le moto-réducteur. De tels dispositifs d'entraînement sont utilisés comme tubes enrouleurs (FR 2 480 846, FR 2 376 285) ou comme rouleaux transporteurs (FR 2 616 418).

Afin de satisfaire les normes de sécurité, ces moteurs doivent soit présenter une mise à la terre, soit posséder une double isolation. La mise à terre exige un fil supplémentaire et peut poser un problème important, notamment lors de rénovations d'immeubles anciens. Pour cette raison, c'est la double isolation qui a été généralement adoptée. Il est connu de réaliser des moto-réducteurs dont le tube extérieur est en matériau isolant. Dans ces réalisations, le tube assure non seulement la seconde isolation, mais il transmet en outre le couple moteur au réducteur, de telle sorte qu'il doit présenter un bonne résistance mécanique. Les matériaux isolants étant, à prix égal, moins performants mécaniquement, ou, à performance mécanique égale, plus coûteux que les métaux, une telle solution implique soit l'augmentation dimensionnelle de l'épaisseur du tube, donc du moto-réducteur, soit l'augmentation de son coût. En outre, en raison de ses propriétés isolantes, le tube ne peut assurer ni le passage du flux magnétique, ni la dissipation thermique comme le fait un tube métallique. Or, les moteurs tubulaires sont généralement de petits moteurs dont on tire le maximum de puissance, certes sur des périodes courtes, mais suffisantes pour développer une chaleur importante, de telle sorte qu'une bonne dissipation thermique est nécessaire afin d'éviter une détérioration rapide du moteur. Dès lors, si on utilise un tube en matière isolante, il est nécessaire, pour conserver les mêmes performances du moteur, d'augmenter ses dimensions et /ou d'améliorer la qualité des tôles de l'induit, ce qui conduit soit à une nouvelle augmentation des dimensions du moteur, soit à une augmentation des coûts.

Afin de pallier ces inconvénients, on a réalisé un moto-réducteur à tube métallique autour duquel on a disposé une gaine isolante. Une telle solution implique tout d'abord de recouvrir l'ensemble du moto-réducteur, ce qui constitue une opération coûteuse. De plus, pour prévenir tout risque de détérioration de la gaine isolante du fait d'agressions extérieures, notamment lors d'un montage en chantier, et garantir qu'elle puisse en toutes circonstances assurer sa fonction de double isolation, il est nécessaire de lui donner une épaisseur relativement importante, ce qui a pour effet d'augmenter le diamètre du moto-réducteur et de réduire sa dissipation thermique, ce qui conduit à nouveau à une nouvelle augmentation des dimensions du moteur ou une augmentation de son coût.

Il est connu, par ailleurs, de disposer une enveloppe isolante entre le stator et boîtier d'un moteur de machine électrique dont le boîtier peut venir en contact avec l'utilisateur de la machine (CH-A-306 158). Une telle solution, appliquée aux moto-réducteurs tubulaires, permettrait d'obvier aux inconvénients des solutions utilisées à ce jour, c'est-à-dire de réaliser une double isolation sans augmentation sensible du diamètre du moto-réducteur, ni réduction sensible de sa dissipation thermique, en utilisant une enveloppe mince protégée par le tube, mais il s'est avéré que la fixation axiale de l'enveloppe isolante posait des problèmes, particulièrement lors de l'introduction du moteur dans son tube, un contact entre le tube et l'enveloppe isolante permettant de réduire au minimum l'encombrement et d'assurer une meilleure dissipation thermique par le tube, ainsi qu'une participation du tube à la conduite du flux magnétique.

L'invention a pour but d'assurer une bonne tenue axiale de l'enveloppe isolante sur le stator. Cette tenue est assurée par les mesures définies par la revendication 1.

Les extrémités de l'enveloppe isolante dépassant le stator enserrent les parties de diamètre réduit des pièces d'extrémité, par enroulage ou thermorétraction, et présentent donc également un diamètre inférieur à celui du stator, ce qui a pour effet de verrouiller axialement l'enveloppe sur le stator.

Selon une forme d'exécution, l'une des pièces d'extrémité présente une première partie tronconique suivie d'une partie cylindrique intermédiaire de diamètre supérieur au diamètre du stator de manière à permettre l'introduction à force de la pièce d'extrémité dans le tube par déformation élastique du tube, selon un procédé défini à la revendication 10.

Les dessins annexés représentent, à titre d'exemple, quatre formes d'exécution de l'invention.

La figure 1 représente, partiellement, en coupe axiale un moto-réducteur selon une première forme d'exécution.

Les figures 2 à 5 représentent des phases successives de mise en place du tube métallique d'un moto-réducteur selon une deuxième forme d'exécution.

La figure 6 représente, partiellement, une troisième forme d'exécution.

La figure 7 représente, partiellement, une quatrième forme d'exécution.

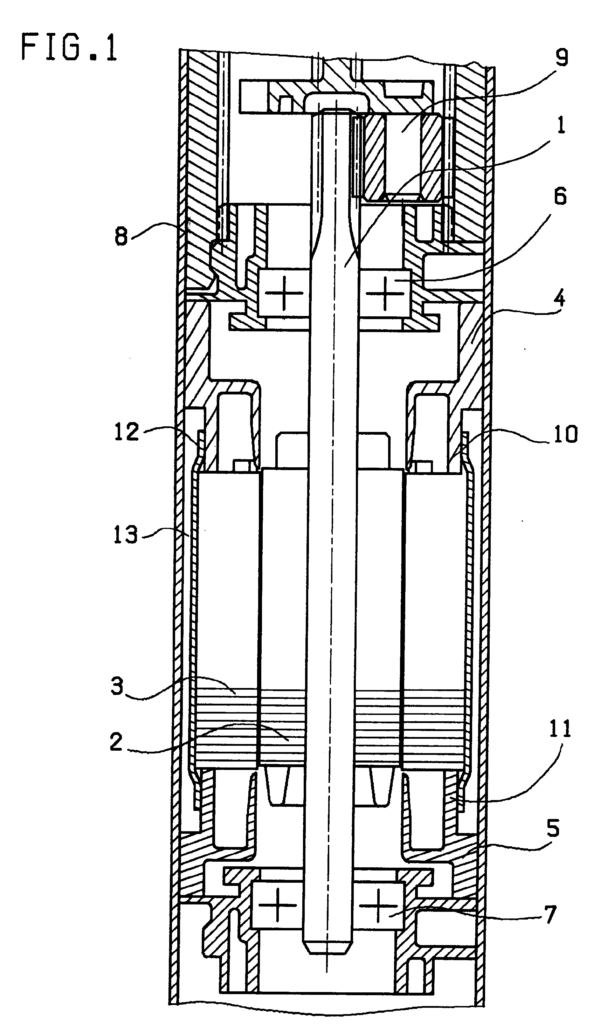

Le moto-réducteur représenté à la figure 1 comprend un arbre 1 sur lequel est fixé un rotor 2 entouré d'un stator 3 fixé entre deux pièces d'extrémité 4 et 5 dites bols de chignon, ces pièces 4 et 5 étant montées sur l'arbre 1 au moyen de paliers à billes ou à rouleaux 6 et 7. Sur et autour des pièces d'extrémités 4 et 5 est fixé un tube en acier 8 entourant donc complètement le moteur, ainsi qu'un réducteur 9 au mobile d'entrée duquel le tube 8 est accouplé par une couronne dentée, de manière connue. Les pièces d'extrémité 4 et 5 présentent une partie intérieure 10, respectivement 11, jouxtant le stator, de diamètre inférieur au diamètre du stator 3. Le stator 3 et les parties 10 et 11 des pièces d'extrémité sont entourés d'une enveloppe tubulaire 12 en matériau isolant dont les parties dépassant le stator enserrent les parties de diamètre réduit 10 et 11 des pièces d'extrémité 4 et 5. La longueur des parties dépassant le stator 3 satisfait les normes relatives aux lignes de fuite, cette longueur étant d'une dizaine de millimètres. Dans ce cas, le tube 8 est séparé de l'enveloppe isolante 12 par un espace 13. L'enveloppe isolante 12 est formée à partir d'une gaine en matériau synthétique thermo-rétractable, par exemple une gaine obtenue à partir d'un film polyester à usage électrique du commerce. Ces films sont fabriqués notamment par les sociétés DUPONT DE NEMOURS et RHONE-POULENC. L'épaisseur de l'enveloppe 12 est de l'ordre de 0,08 mm, épaisseur suffisante pour supporter la tension de claquage. L'enveloppe 12 est soumise à une opération de thermo-rétraction sur le stator 3, de telle sorte qu'elle enveloppe parfaitement le stator 3 et ses pièces d'extrémité 4 et 5.

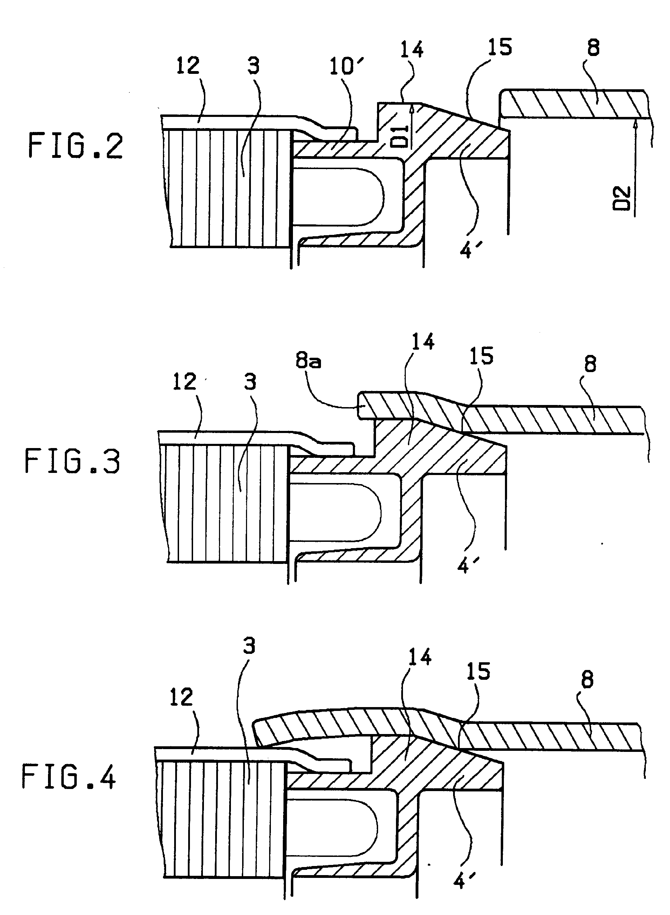

Selon une autre forme d'exécution de l'invention, l'espace 13 entre l'enveloppe isolante 12 et le tube 8 est supprimé, le tube métallique 8 étant en étroit contact avec l'enveloppe isolante 12. Comme déjà souligné dans l'introduction, cette construction présente l'avantage de réduire à son minimum l'encombrement du moto-réducteur et de permettre au tube métallique 8 de participer au mieux aux performances du moteur. Un mode de réalisation d'une telle exécution est illustré par les figures 2 à 5.

Les figures 2 à 5 représentent une partie du stator 3 et de l'une de ses pièces d'extrémité 4' légèrement modifiée par rapport à la pièce 4 de la figure 1. Cette pièce 4' présente une partie 10' analogue à la partie 10 de la figure 1. La pièce 4' présente en outre une partie intermédiaire cylindrique 14 et une partie tronconique 15. Le diamètre D1 de la partie 14 est légèrement plus grand que le diamètre du stator 3 muni de son enveloppe isolante 12. A son autre extrémité, le stator 3 peut être muni d'une pièce analogue à la pièce 4', mais de diamètre D1 égal au diamètre du stator muni de son enveloppe 12 ou d'une pièce analogue à la pièce 4', mais sans la partie tronconique 15.

Pour assembler le moto-réducteur, on assemble tout d'abord le rotor 2, le stator 3 et ses pièces d'extrémité. On met ensuite en place l'enveloppe isolante thermo-rétractable 12 dont les extrémités, par thermo-rétraction, se rétractent autour du stator 3 et des parties 10' des pièces d'extrémité en venant ainsi se verrouiller axialement sur le stator 3. On introduit ensuite l'ensemble par la partie tronconique 15 dans le tube métallique 8, dont le diamètre intérieur D2 est égal au diamètre du stator 3 équipé de son enveloppe isolante 12 et donc inférieur au diamètre D1 de la partie 14 de la pièce d'extrémité 4'.

L'insertion de la pièce 4' dans le tube 8 a pour effet de dilater élastiquement le tube 8, de telle sorte que son extrémité 8a arrive autour du stator 3 avec un diamètre intérieur supérieur au diamètre de ce stator équipé de son enveloppe isolante (figure 3).

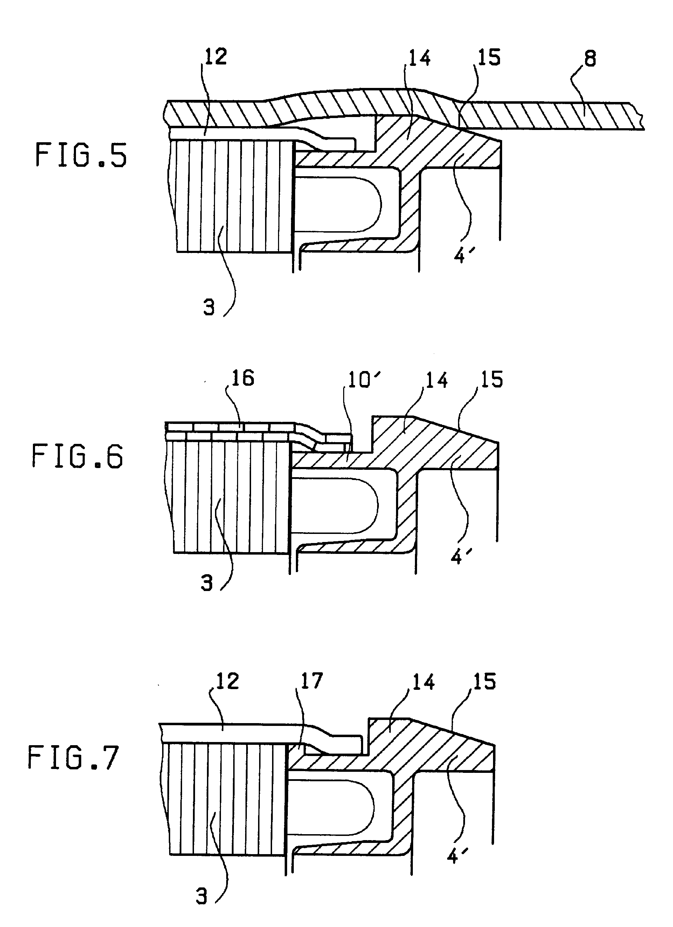

L'expansion du tube se faisant dans le domaine élastique, le tube 8 reprend ensuite son diamètre intérieur initial (figure 4) et vient en contact avec l'enveloppe isolante 12 du stator, étant donné que le diamètre D2 est égal au diamètre du stator équipé de son enveloppe isolante (fig. 5). Le contact entre le tube 8 et l'enveloppe isolante 12 se fait toutefois sans serrage notable de telle sorte que le tube 8 peut glisser sur l'enveloppe isolante 12. Le tube 8 vient finalement recouvrir l'autre pièce d'extrémité du moteur. Il est possible de prévoir un serrage plus fort autour de cette seconde pièce d'extrémité en prévoyant une partie tronconique assurant une légère dilatation du tube. Le réducteur est ensuite assemblé au tube 8 de façon habituelle.

La mise en place du tube 8, de telle sorte qu'il soit en contact avec le stator 3 muni de son enveloppe isolante 12, pourrait se faire par d'autres moyens, en particulier par magnétoformage ou par galetage, c'est-à-dire par écrasement par un galet ou molette tournant autour du tube.

Il est possible d'utiliser d'autres matériaux que le polyester pour réaliser l'enveloppe isolante 12. Il est par exemple possible d'utiliser un film polyester en bande ou du KAPTON (Polyimide de Dupont de Nemours) ou du MYLAR (Dupont de Nemours). Ces derniers matériaux ne sont pas thermoréctractables, mais leurs qualités électriques sont telles qu'il est possible de réduire l'épaisseur de la gaine isolante à 0,02 mm.

La figure 6 illustre un exemple de réalisation au moyen d'une bande enroulée serrée sur plusieurs épaisseurs et collée autour du stator 3 et des parties 10' des pièces d'extrémité.

Les extrémités du stator 3 présentent des arêtes assez vives susceptibles de détériorer l'enveloppe isolante. La figure 7 représente une forme d'exécution comportant un moyen destiné à éviter une telle détérioration. L'extrémité de la partie 10' de diamètre réduit présente une partie 17 de même diamètre que le stator, relativement étroite et dont l'arête opposée au stator est arrondie de manière à ne pas blesser le film.

## Revendications

1. Moto-réducteur tubulaire à double isolation comprenant un moteur constitué d'un stator (3) solidaire d'un tube métallique (8) entourant au moins le moteur et d'un rotor (2) cinématiquement relié au mobile d'entrée d'un réducteur, dans lequel le stator est entouré d'une enveloppe isolante (12) dont les extrémités débordant les extrémités du stator sont resserrées sur des pièces d'extrémité (4', 5) dont la partie (10', 11) jouxtant le stator présente, au moins sur sa plus grande partie, un diamètre inférieur au diamètre du stator, caractérisé en ce que l'une des pièces d'extrémité (4') présente une première partie tronconique (15) suivie d'une partie cylindrique intermédiaire (14) de diamètre (D1) supérieur au diamètre du stator (3) muni de son enveloppe isolante et au diamètre intérieur (D2) du tube métallique (8) autour du stator et précédant la partie (10') de diamètre inférieur au diamètre du stator.

2. Moto-réducteur selon la revendication 1, caractérisé en ce que la partie des pièces d'extrémité jouxtant le stator présente une première partie (17), relativement étroite, de diamètre égal au diamètre du stator.

3. Moto-réducteur selon l'une des revendications 1 ou 2, caractérisé en ce que l'enveloppe isolante (12) est un polyimide.

4. Moto-réducteur selon la revendication 3, caractérisé en ce que l'épaisseur de l'enveloppe isolante est d'environ 0,02 mm.

5. Moto-réducteur selon l'une des revendications 1 ou 2, caractérisé en ce que l'enveloppe isolante (12) est en matière synthétique thermo-rétractable.

6. Moto-réducteur selon la revendication 5, caractérisé en ce que l'enveloppe isolante (12) est constituée d'une gaine tubulaire en polyester.

7. Moto-réducteur selon la revendication 6, caractérisé en ce que l'épaisseur de l'enveloppe isolante est d'environ 0,08 mm.

8. Moto-réducteur selon l'une des revendications 1 à 4, caractérisé en ce que l'enveloppe isolante est une bande enroulée serrée sur plusieurs épaisseurs.

9. Procédé de fabrication d'un moto-réducteur selon la revendication 1, caractérisé en ce qu'après avoir assemblé le rotor (2) et le stator (3) avec ses pièces d'extrémité (4'), on entoure le stator de son enveloppe isolante (12), puis introduit à force le stator dans le tube métallique (8) par sa pièce d'extrémité (4') présentant une partie tronconique (15) et (14) de diamètre (D1) supérieur au diamètre intérieur (D2) du tube, de manière à provoquer la dilatation élastique du tube sur cette partie et de telle sorte que le tube reprenne ensuite son diamètre initial pour venir en contact avec l'enveloppe isolante.

## Claims

1. Double-insulated tubular reduction motor comprising a motor consisting of a stator (3) secured to a metal tube (8) surrounding at least the motor and of a rotor (2) kinematically connected to the moving input body of a reduction gear, in which the stator is surrounded by an insulating jacket (12) whose ends which extend beyond the ends of the stator are pulled together onto end pieces (4', 5) of which the part (10', 11) adjoining the stator has, at least on its largest part, a diameter which is less than the diameter of the stator, characterized in that one of the end pieces (4') has a first frustoconical part (15) followed by an intermediate cylindrical part (14) of diameter (D1) which is greater than the diameter of the stator (3) provided with its insulating jacket, and than the internal diameter (D2) of the metal tube (8) around the stator and preceding the part (10') whose diameter is less than the diameter of the stator.

2. Reduction motor according to Claim 1, characterized in that the part of the end pieces adjoining the stator has a first part (17) which is relatively narrow, whose diameter is equal to the diameter of the stator.

3. Reduction motor according to one of Claims 1 or 2, characterized in that the insulating jacket (12) is a polyimide.

4. Reduction motor according to Claim 3, characterized in that the thickness of the insulating jacket is approximately 0.02 mm.

5. Reduction motor according to one of Claims 1 or 2, characterized in that the insulating jacket (12) is made from a synthetic heat-shrinkable material.

6. Reduction motor according to Claim 5, characterized in that the insulating jacket (12) consists of a tubular polyester sheath.

7. Reduction motor according to Claim 6, characterized in that the thickness of the insulating jacket is approximately 0.08 mm.

8. Reduction motor according to one of Claims 1 to 4, characterized in that the insulating jacket is a tightly wound strip over a plurality of thicknesses.

9. Method for manufacturing a reduction motor according to Claim 1, characterized in that after having assembled the rotor (2) and the stator (3) with its end pieces (4'), the stator is surrounded with its insulating jacket (12), then the stator is forcibly inserted into the metal tube (8) via its end piece (4') having a frustoconical part (15) and (14) of diameter (D1) greater than the internal diameter (D2) of the tube, so as to give rise to the elastic expansion of the tube over this part and so that the tube then resumes its initial diameter in order to come into contact with the insulating jacket.

## Patentansprüche

1. Rohrförmiger Motor mit Reduziergetriebe und Doppelisolation, dessen Motor aus einem Stator (3) besteht, der mit einer metallischen Röhre (8), die wenigstens den Motor umgibt, fest verbunden ist und aus einem Rotor (2), der kinematisch mit einem beweglichen Eingangsteil eines Untersetzungsgetriebes verbunden ist, in welchem der Stator von einer isolierenden Hülse (12) umgeben ist, deren Enden, welche über die Enden des Stators hinausragen über Endteile (4',5) verengt sind, deren dem Stator nahes Teil (10', 11) wenigstens auf seinem grössten Teil einen kleineren Durchmesser als der Durchmesser des Stators aufweist, dadurch gekennzeichnet, dass das eine der Endteile (4') einen ersten stumpfkegelförmigen Teil (15) aufweist, gefolgt von einem zylinderförmigen Mittelteil (14), dessen Durchmesser (D1) grösser ist als der Durchmesser des Stators (3) mit seiner isolierten Hülse und als der innere Durchmesser (D2) der metallischen Röhre (8), um den Stator herum und vor dem Teil (10') dessen Durchmesser kleiner ist als derjenige des Stators.

2. Rohrförmiger Motor mit Reduziergetriebe gemäss Anspruch 1, dadurch gekennzeichnet, dass der Teil der Endteile der nahe dem Stator liegt, einen ersten relativ engen Teil (17) aufweist, dessen Durchmesser demjenigen des Stators gleich ist.

3. Rohrförmiger Motor mit Reduziergetriebe gemäss einem der Ansprüche 1 oder 2, dadurch gekennzeichnet, dass die isolierende Hülse (12) aus Polyimid besteht.

4. Rohrfömriger Motor mit Reduziergetriebe gemäss Anspruch 3, dadurch gekennzeichnet, dass die Dicke der isolierenden Hülse ungefähr 0,02 mm beträgt.

5. Rohrförmiger Motor mit Reduziergetriebe gemäss einem der Ansprüche 1 oder 2, dadurch gekennzeichnet, dass die isolierende Hülse (12) aus thermorückziehbarem Kunststoff besteht.

6. Rohrförmiger Motor mit Reduziergetriebe gemäss Anspruch 5, dadurch gekennzeichnet, dass die isolierende Hülse (12) aus einer rohrförmigen Polyesterhülle besteht.

7. Rohrförmiger Motor mit Reduziergetriebe gemäss Anspruch 6, dadurch gekennzeichnet, dass die Dicke der isolierenden Hülse ungefähr 0,08 mm beträgt.

8. Rohrförmiger Motor mit Reduziergetriebe gemäss einem der Ansprüche 1 bis 4, dadurch gekennzeichnet, dass die isolierende Hülse aus einem in mehreren Schichten eng gerollten Band besteht.

9. Verfahren zur Herstellung eines rohrförmigen Motors mit Reduziergetriebe gemäss Anspruch 1, dadurch gekennzeichnet, dass nachdem der Rotor (2) und der Stator (3) mit seinen Endteilen (4') zusammenmontiert worden sind, man den Stator mit seiner isolierenden Hülse (12) umgibt, danach unter Kraftanwendung den Stator in die metallische Röhre (8) mit dem stumpfkegeligen Teil (14, 15) seines Endteiles (4') einfügt, dessen durch Durchmesser (D1) grösser ist als der innere Durchmesser (D2) der Röhre, unter elastischer Dehnung der Röhre über diesem Teil, so dass die Röhre nachher ihren ursprünglichen Durchmesser wieder einnimmt und mit der isolierenden Hülse in Kontakt kommt.
